# EUROPÄISCHE PATENTSCHRIFT

(11) **EP 1 180 221 B1**
(45) Veröffentlichungstag und Bekanntmachung des Hinweises auf die Patenterteilung: **12.05.2004**
(21) Anmeldenummer: 99965569.9
(22) Anmeldetag: 28.12.1999
(51) Int. Cl.: F16D 65/16

(54) **HYDRAULIKZYLINDERANORDNUNG FÜR FAHRZEUG-SCHEIBENBREMSE**
HYDRAULIC CYLINDER SYSTEM FOR VEHICLE DISK BRAKE
ENSEMBLE VERIN HYDRAULIQUE POUR FREIN A DISQUE DE VEHICULE

(30) Priorität: 29.12.1998 DE 19860621
(43) Veröffentlichungstag der Anmeldung: 20.02.2002
(73) Patentinhaber: Eberle, Manfred, 72581 Dettingen/Erms (DE)
(72) Erfinder: Eberle, Manfred, 72581 Dettingen/Erms (DE)
(74) Vertreter: Ostertag, Ulrich, Dr.
(86) Internationale Anmeldenummer: PCT/EP1999/010430
(87) Internationale Veröffentlichungsnummer: WO 2000/039478

(56) Entgegenhaltungen:
- DE-U- 8 812 936
- FR-A- 2 746 874
- GB-A- 2 129 878
- GB-A- 2 282 648

## Beschreibung

Die Erfindung betrifft eine Scheibenbremse für Fahrzeuge mit einer Bremsscheibe, einem Bremssattelgehäuse, mindestens einem in einer Bohrung des Bremssattelgehäuses verschiebbaren Bremskolben und einer Kolbenrückführeinrichtung, die mindestens einen in eine Ringnut des Bremskolbens eingreifenden, elastisch verformbaren Ring umfaßt.

Bei Fahrzeugen und motorbetriebenen Zweiradfahrzeugen kommen Scheibenbremsen weit verbreitet zum Einsatz.
In jüngerer Zeit finden Scheibenbremsen auch bei Fahrrädern Anwendung. Bei Scheibenbremsen mit Bremssattelkonstruktionen werden die Bremskolben, an denen Bremsbacken mit Bremsbelägen befestigt sind, üblicherweise in axialer Richtung gegen die sich drehende Bremsscheibe geführt. Nach der Rücknahme des über einen Geberzylinder am Bremsgriff aufgebauten Drucks wird der Bremskolben wieder in die Bremsbereitschaftsposition im Druckraum des Bremssattels zurückgeführt.

Aus der GB 2 282 648 A ist eine Scheibenbremse der eingangs genannten Art bekannt. Hier werden als Rückführeinrichtung, welche die Rückführkraft für den Bremskolben bereitstellt, zwei elastisch verformbare Ringe verwendet. Diese Ringe greifen ausschließlich in eine Nut in der Umfangswand des Kolbens ein, während sie an der gegenüberliegenden Seite an die glatte Wand der Zylinderbohrung angepreßt werden. Wird der Druckraum mit Druck beaufschlagt, so verformt sich durch die Druckeinwirkung bei einem der beiden Ringe der über die Nut des Kolbens überstehende Bereich elastisch. Wird der Druck vom Druckraum wieder weggenommen, entspannt sich der Ring wieder und erzeugt so eine Kraft, welche sich der Kolbenrückführung widersetzt. Der andere der beiden elastisch verformbaren Ringe befindet sich auf der drucklosen Seite des ersten, dichtenden Ringes und ist als Reibungsring ausgestaltet, dessen Wirkungsmechanismus etwas anders ist: Auch er greift zwar in eine Ringnut an der Wand des Kolbens ein, liegt aber unter bewußter Reibung an der glatten Wand der Zylinderbohrung an. Bewegt sich der Kolben bei Druckbeaufschlagung des Druckraumes nach außen, wird der Reibungsring dadurch elastisch verformt, daß er von der Ringnut des Kolbens einerseits mitgenommen wird, andererseits durch Reibung an der Wand der Zylinderbohrung festgehalten wird. Hierbei entsteht eine elastische Rückstellkraft. Die resultierende der von beiden Ringen stammenden Kräfte ist die effektiv auf den Kolben wirkende Rückstellkraft.

Da bei diesem Stande der Technik die Rückstellkraft der elastisch verformbaren Ringe durch die Reibungs-Mitnahme der Ringe an einer glatten Fläche entsteht, ist ihre Größe schlecht vorhersehbar und reproduzierbar.

Aufgabe der vorliegenden Erfindung ist es, eine Scheibenbremse der eingangs genannten Art so auszugestalten, daß reproduzierbare und ausreichend große Rückstellkräfte erzeugt werden können.

Diese Aufgabe wird erfindungsgemäß dadurch gelöst, daß
der elastisch verformbare Ring auch in eine Ringnut in der Wand der Bohrung des Bremssattelgehäuses eingreift und daß eine der beiden Ringnuten in axialer Richtung breiter als die andere ist.

Bei der vorliegenden Erfindung wird der elastische Ring in ganz definierter Weise dadurch verformt, daß er nicht nur auf einer Seite sondern auf beiden gegenüberliegenden Seiten in eine Ringnut des jeweiligen Teiles eingreift. Eine dieser beiden Ringnuten ist verhältnismäßig kurz, ähnlich wie beim Stande der Technik, so daß der Ring an der entsprechenden Seite in axialer Richtung positiv festgehalten wird. Die Ringnut an der gegenüberliegenden Seite dagegen ist axial länger, so daß die in diese Ringnut eingreifende Seite des elastischen Ringes eine Axialbewegung durchführen kann. Beim Ausfahren des Kolbens kann sich auf diese Weise zunächst eine Wegstrecke ergeben, auf der sich der elastische Ring überhaupt nicht oder - bei einer unten beschriebenen Ausführungsform der Erfindung - verhältnismäßig gering verformt; wenn jedoch der elastische Ring an die nach innen zeigende Begrenzungsfläche der größere axiale Länge aufweisenden Ringnut anstößt, führt eine weitere Verschiebung des Kolbens zu einer starken Verformung des elastischen Ringes, was eine entsprechend hohe, definierte Rückstellkraft zur Folge hat.

Vorteilhafte Weiterbildungen der Erfindung sind in den Unteransprüchen angegeben, auf die verwiesen wird.

Ein Ausführungsbeispiel der Erfindung wird nachfolgend anhand der Zeichnung näher erläutert; es zeigen
- Figur 1: schematisch einen Schnitt durch eine Fahrrad-Scheibenbremse;
- Figur 2: eine Ausschnittvergrößerung aus Figur 1;
- Figuren 3 bis 5: ein zweites Ausführungsbeispiel, ähnlich der Figur 2 in verschiedenen Abnutzungszuständen der Bremsbeläge.

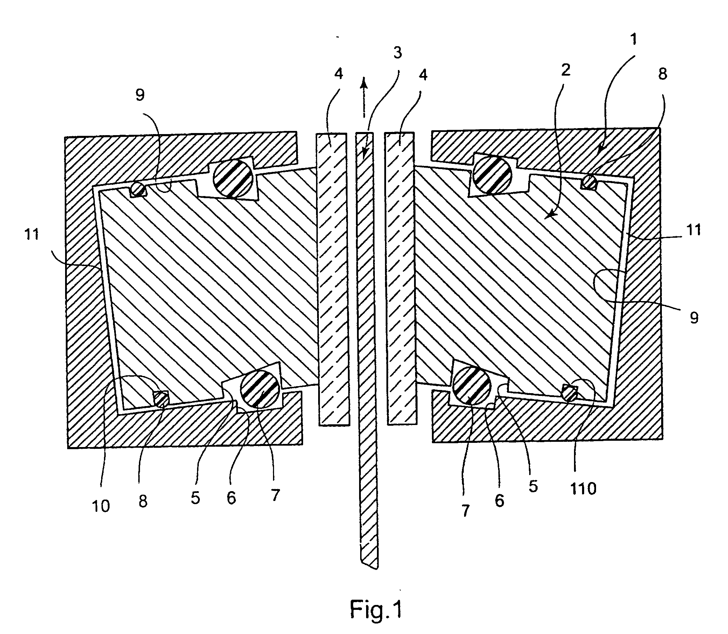

In Figur 1 ist schematisch im Schnitt die Scheibenbremse eines Fahrrads dargestellt. Ein Bremssattelgehäuse 1 überspannt in bekannter Weise eine Bremsscheibe 3, die sich im Sinne des in Figur 1 dargestellten Pfeiles verdreht. Die beiden Schenkel des Bremssattelgehäuses 1 enthalten jeweils eine Zylinderbohrung 9, in welcher ein Bremskolben 2 verschiebbar geführt ist. Die Achsen der Bremskolben 9 schließen mit der Ebene der Bremsscheibe 3 einen von 90° abweichenden Winkel und untereinander einen stumpfen Winkel in der in Figur 1 dargestellten Weise ein.

Die äußeren Enden der Bremskolben 2 tragen jeweils einen einen Bremsbelag tragenden Bremsbacken 4, der sich parallel zur Bremsscheibe 3 erstreckt.

In die Mantelfläche der Bremskolben 2 sind zwei Nuten 5, 10 eingearbeitet. In der dem inneren Kolbenende benachbarten Nut 10 ist ein Dichtring 8 eingesetzt, welcher gleitend an der Mantelfläche der Zylinderbohrung 9 anliegt. Die zwischen dem Boden der Zylinderbohrungen 9 und den Dichtringen 8 liegenden Räume 11 dienen in bekannter Weise als Druckräume und sind über nicht dargestellte Hydraulikleitung mit dem Druckgeber am Bremsgriff verbunden. Die Kolben 2 werden durch Betätigung des Bremsgriffes in den Zylinderbohrungen 9 nach außen geführt und die Bremsbeläge der Bremsbacken 4 gegen die entsprechenden Flächen der Bremsscheiben 3 angelegt.

Die den Bremsbacken 4 benachbarte Nut 5 in der Umfangswandung der Bremskolben 2 besitzt eine verhältnismäßig große axiale Länge. Die Tiefe der Nut 5 vergrößert sich nach außen, also in Richtung auf die zugeordnete Bremsbacke 4, so daß der Nutgrund eine Konusringfläche darstellt.

Der Nut 5 in den Bremskolben 2 gegenüberliegend ist in die Wandung der Zylinderbohrungen 9 jeweils eine weitere Nut 6 eingearbeitet. Diese Nut 6 weist jedoch eine kürzere axiale Länge auf als die Nut 5 der Bremskolben 2. Ihr Grund verläuft zudem parallel zu den Umfangswänden der Zylinderbohrungen 9 und hat daher die Gestalt eines zylindrischen Ringes. In der Bremsen-Lösestellung, in welcher die Bremskolben 2 in ihre Ruheposition in den Zylinderbohrungen 9 zurückgefahren sind, fluchten die dem jeweiligen Bremsbacken 4 benachbarten Begrenzungswände der Nuten 6 und 5, wie dies der Figur 1 zu entnehmen ist.

In die Nuten 5 und 6 ist ein elastischer O-Ring 7 eingelegt, dessen Radius auf die axiale Abmessung der Nut 6 im Bremssattelgehäuse 2 so abgestimmt ist, daß sich dieser O-Ring 7 axial im wesentlichen nicht verschieben kann. Der Radius des O-Ringes 7 ist darüberhinaus so gewählt, daß die Mantelfläche des O-Ringes 7 spätestens nach einer gewissen Auswärts-Bewegung der Bremskolben 2 mit dem Grund der Nut 5 in Berührung kommt.

Die beiden Nuten 5 und 6 sowie der jeweils zwischen diesen liegende O-Ring 7 dienen gemeinsam als Rückstelleinrichtung für den jeweils zugeordneten Bremskolben 2 in folgender Weise:

Werden bei Betätigung des Bremsgriffes die Druckräume 11 mit Druck beaufschlagt und auf diese Weise die Bremskolben 2 nach außen gefahren, bewegen sich - spätestens nach einer gewissen Wegstrecke der Bremskolben 2 - die inneren Bereiche der Mantelfläche der O-Ring 7 an dem rampenförmigen Grund der zugeordnete Nut 5 entlang. Die O-Ringe 7 werden auf diese Weise, da sie an einer Seite axial nicht ausweichen können, elastisch verformt. Hierdurch entsteht eine Rückstellkraft, deren Größe durch das Zusammenspiel der Elastizität der O-Ringe 7 und des Konuswinkels des Grundes der Nuten 5 eingestellt werden kann. Haben sich die Bremskolben 2 innerhalb der Zylinderbohrung 9 so weit nach außen bewegt, daß nunmehr auch die inneren Begrenzungsflächen der Nuten 5 an den O-Ringen 7 zur Anlage kommen, wird deren Verformung bei einer Weiterbewegung des Bremskolbens 2 massiv verstärkt, so daß auch die von den O-Ringen 7 bewirkte Rückstellkraft deutlich erhöht wird.

Wird der Bremsgriff losgelassen und werden auf diese Weise die Druckräume 11 drucklos gemacht, entspannen sich die O-Ringe 7 wiederum unter gleichzeitiger Rückführung der Bremskolben 2 in den Zylinderbohrungen 9 in die in Figur 1 dargestellte Ruheposition.

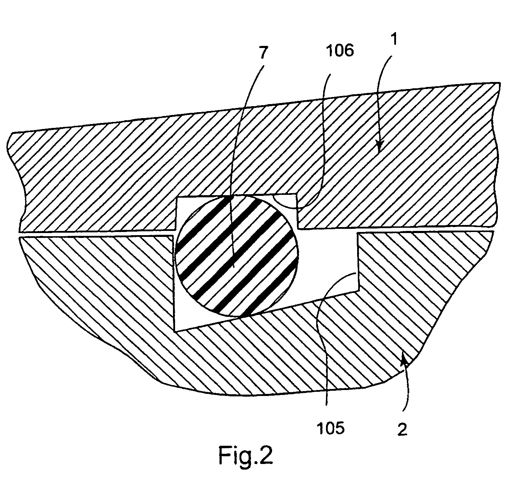

Beim oben beschriebenen Ausführungsbespiel war die Bewegungsrichtung der Bremskolben 2 entsprechend der Orientierung der Zylinderbohrungen 9 schräg gegen die Bremsscheibe 3 gerichtet. Dies führt zu einem etwas "sanfteren" Bremsenangriff. Grundsätzlich ist es jedoch auch möglich, die Bremskolben 2 senkrecht auf die Bremsscheibe 3 zuzuführen, wenn ein agressiveres Einsetzen der Bremswirkung gewünscht ist. Beim oben beschriebenen Ausführungsbeispiel besassen die Ringnuten 5 in den Bremskolben 2 einen Nutgrund, der eine Konusringfläche darstellte. Hierdurch und in Abstimmung mit der Größe der in diesen Ringnuten 5 einliegenden O-Ringe 7 läßt sich eine gewisse Rückstellkraft schon bei kleinen Huben erzielen, wie dies oben geschildert wurde. Es ist jedoch auch möglich, den Grund der Ringnuten 5 als Zylindermantelfläche zu gestalten, wenn zu Beginn des Kolbenhubes noch keine oder nur eine sehr geringe Rückstellkraft erwünscht ist. Schließlich wurde bei der obigen Beschreibung des Ausführungsbeispieles nach den Figuren 1 und 2 davon ausgegangen, daß die Kolbenbetätigung hydraulisch erfolgt. Selbstverständlich ist es möglich, auch eine pneumatische oder rein mechanische Kolbenbetätigung vorzusehen.

Werden die Dimensionen der Ringnuten 5, 6 in den Bremskolben 2 und in den Zylinderbohrungen 9 sowie die Elastizität der O-Ringe 7 in geeigneter Weise auf einander abgestellt, läßt sich mit der dargestellten und oben beschriebenen Scheibenbremse ein ABS-ähnlicher Effekt erzielen, ohne hierfür eine elektronische Steuerung einsetzen zu müssen.

Die O-Ringe 7 dienen bei dieser Scheibenbremse nicht der Abdichtung gegen das Hydrauliksystem. Allerdings dichten sie in gewollter Weise gegen von außen einwirkende Feuchtigkeit oder Schmutz ab.

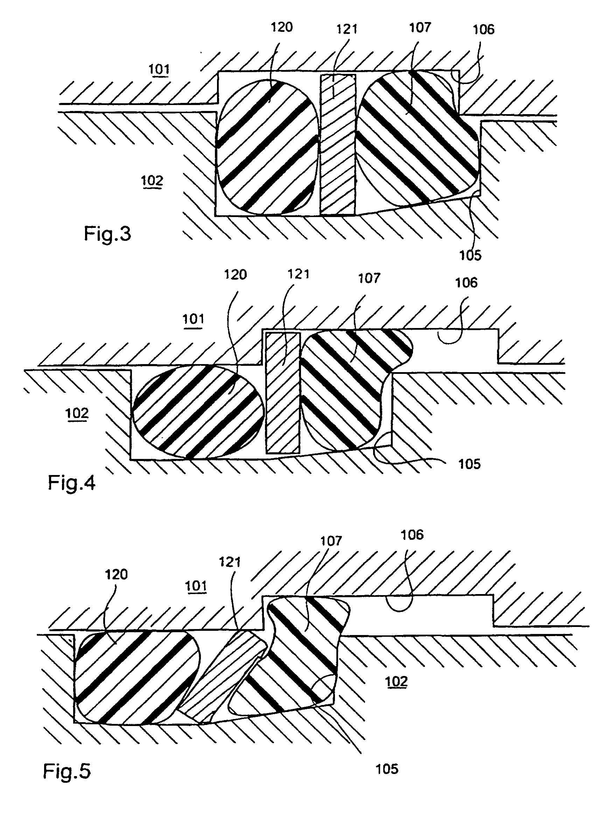

In den Figuren 3 bis 5 ist in einer Ansicht, die der Figur 2 ähnelt, ein Ausschnitt von Bremskolben und Bremszylinder dargestellt, wie sie bei größeren Bremsen, z.B. für Motorroller oder Motorräder, Verwendung finden. Entsprechende Teile sind mit demselben Bezugszeichen wie in Figur 2 zzgl. 100 gekennzeichnet.

In Figur 3 sind aus Figur 2 wiederzuerkennen: das Bremssattelgehäuse 101 mit der in dieses eingearbeiteten Ringnut 106, der Bremskolben 102 mit der in diesen eingearbeiteten Ringnut 105, die eine größere axiale Abmessung aufweist als die Ringnut 106 des Bremssattelgehäuses 101, sowie der in den beiden Ringnuten 106, 105 einliegende elastisch verformbare Ring 107.

Beide Ringnuten 106, 105 sind länger als beim Ausführungsbeispiel von Figur 2. Hierdurch ist es möglich, in diese Ringnuten 105, 106 einen zweiten elastisch verformbaren Ring 120 einzusetzen, wobei zwischen diesem zweiten elastisch verformbaren Ring 120 und dem ersten elastisch verformbaren Ring 107 ein Distanzring 121 liegt. Der Distanzring 121 wird von den Ringnuten 105, 106 verschiebbar geführt. Er besteht aus einem verhältnismäßig starren Material, so daß er zwischen den elastisch verformbaren Ringen 107 und 120 Kräfte übertragen kann. Andererseits wird von dem Distanzring 121 auch eine gewisse Verformbarkeit gefordert, wie dies weiter unten insbesondere anhand der Figuren 4 und 5 geschildert wird.

Etwa in dem Bereich, in dem sich der zweite elastisch verformbare Ring 120 befindet, ist der Grund der Ringnut 105 im Bremskolben 102 eine Zylinderfläche, während der Grund der Ringnut 105 im Bereich des ersten elastisch verformbaren Elementes 107 eine Konusmantelfläche ist, wie dies auch beim Ausführungsbeispiel der Figur 2 der Fall war.

In Figur 3 ist der "Neuzustand" der Scheibenbremse dargestellt, in welcher die Bremsbeläge noch nicht abgenutzt sind. In diesem "Neuzustand" fluchten die jeweils äußeren (in Figur linken) seitlichen Begrenzungsflächen der beiden Ringnuten 105, 106 während die innere seitliche Begrenzungsfläche der Ringnut 105 des Bremskolbens 102 weiter innen (in Figur also weiter rechts) liegt als die rechte seitliche Begrenzungswand der Ringnut 106 des Bremssattelgehäuse 101. Dies ist eine Folge der geschilderten unterschiedlichen axialen Abmessungen der beiden Ringnuten 105 und 106.

In ihrer Grundfunktion unterscheidet sich der Bremszylinder der Figur 3 nicht wesentlich von demjenigen der Figur 2: Da jedoch auch der zweite elastisch verformbare Ring 120 an der elastischen Verformung beim Ausfahren des Kolbens 102 teilnimmt, wird die Rückstellkennlinie insgesamt etwas weicher. Durch eine unterschiedliche Dimensionierung der beiden Ringe 107, 120, was sowohl im Blick auf die geometrischen Abmessungen als auch auf das gewählte Material erfolgen kann, lassen sich die Rückstellwirkungen der beiden einzelnen Ringe 107, 120 gezielt einstellen. Insbesondere hat sich als günstig herausgestellt, wenn der äußere Ring 120 etwas kleiner als der innere Ring 107 ist.

Figur 4 zeigt denselben Ausschnitt des Bremszylinders wie Figur 3, jedoch nach einer teilweisen Abnutzung des Bremsbelages. Auch Figur 4 stellt die "Bremsenbereitschaftsstellung" dar, in welcher also die Bremse gelöst ist. Durch die Abnutzung der Bremsbeläge konnte sich der Bremskolben 102 eine bestimmte Strecke nach außen bewegen; hierdurch ist der zweite elastisch verformbare Ring 120 vollständig in die Ringnut 105 des Bremskolbens 102 hineingedrückt worden. Die Rückstellwirkung, ausgehend von der dargestellten Bremsenbereitschaftslage, wird nunmehr ausschließlich vom ersten elastisch verformbaren Ring 107 bereitgestellt, der sich, bereits erheblich verformt, noch in den beiden Ringnuten 105 und 106 befindet. Der zweite elastisch verformbare Ring 120 übernimmt in dieser Stellung, in der er mit einer Seite an einer glatten Zylindermantelfläche anliegt, die konventionelle Rolle einer Bremsennachstelleinrichtung, welche für eine Nachstellung des Bremskolbens 102 gegenüber dem Bremssattelgehäuse 101 bei einer weiteren Abnutzung der Bremsbeläge sorgt. Ein kleiner rückstellender Anteil des zweiten elastisch verformbaren Ringes 120, ähnlich derjenigen eines konventionellen "Roll-back-Ringes" dürfte noch vorhanden sein.

Nutzt sich der Bremsbelag weiter ab, wird schließlich diejenige Stellung der verschiedenen Teile erreicht, die in Figur 5 dargestellt ist: Nunmehr hat sich auch der Distanzring 121 unter entsprechender Schrägstellung und einer gewissen elastischen Verformung an den Kanten praktisch vollständig in denjenigen Teil der Ringnut 105 des Bremskolbens 102 hineinbewegt, der sich außerhalb der Ringnut 106 des Bremssattelgehäuses 101 befindet. Er unterstützt auf diese Weise die Funktion des zweiten elastischen Ringes 120 als Kolbennachstelleinrichtung. Der erste elastisch verformbare Ring 107 ist bereits in Bremsenbereitschaftsstellung noch stärker verformt.

Die in der Zeichnung dargestellten Deformationen der elastisch verformbaren Ringe 106 und 120 sowie des Distanzringes 121 sind übertrieben und schematisch. Bei richtiger Abstimmung der Geometrie der verschiedenen Teile sowie richtiger Auswahl der Materialien, insbesondere im Blick auf deren Elastizität, läßt sich erreichen, daß sich bei allen Ausmaßen der Bremsbelagabnutzung immer etwa derselbe Rückhub (z.B. von 1 mm) aus der Bremsenanlageposition einstellt.

Der in den Figuren 3 bis 5 ausschnittsweise dargestellte Bremszylinder wird bei solchen Zweiradfahrzeugen eingesetzt, die über ein offenes Hydraulikflüssigkeitssystem des Flüssigkeitsvolumens verfügen. Bei solchen Systemen fließt aus einem Ausgleichsbehälter Bremsflüssigkeit in das Bremssattelgehäuse 101 nach, wodurch der Bremskolben 102 nach Verschleiß des Bremsbelags in einer neuen Bremsbereitschaftsstellung bleibt, die näher an der Bremsscheibe positioniert ist. Der Abstand des abgenutzten Bremsbelages von der Bremsscheibe bleibt hierdurch weitestgehend gleich.

## Patentansprüche

1. Scheibenbremse für Fahrzeuge mit einer Bremsscheibe,
einem Bremssattelgehäuse (1,101), mindestens einem in einer Bohrung (9,109) des Bremssattelgehäuses verschiebbaren Bremskolben und einer Kolbenrückführeinrichtung, die mindestens einen in eine Ringnut (5,105) des Bremskolbens eingreifenden, elastisch verformbaren Ring (7,107) umfaßt,
**dadurch gekennzeichnet, daß**
der elastisch verformbare Ring (7; 107) auch in eine Ringnut (6; 106) in der Wand der Bohrung (9; 109) des Bremssattelgehäuses (1; 101) eingreift und daß eine (5; 105) der beiden Ringnuten (5, 6; 105, 106) in axialer Richtung breiter als die andere (6; 106) ist.

2. Scheibenbremse nach Anspruch 1, **dadurch gekennzeichnet, daß** eine (5; 105) der beiden Nuten (5, 6; 105, 106) tiefer als die andere (6; 106) ist.

3. Scheibenbremse nach Anspruch 1 oder 2, **dadurch gekennzeichnet, daß** eine (5; 105) der beiden Ringnuten (5, 6; 105, 106) einen Querschnitt aufweist, der sich in der Richtung verkleinert, in welcher sich der elastisch verformbare Ring (7; 107) beim Ausfahren des Bremskolbens (2; 102) zu bewegen sucht.

4. Scheibenbremse nach einem der vorhergehenden Ansprüche, **dadurch gekennzeichnet, daß** der Bremskolben (2; 102) unter einem spitzen Winkel zur Laufrichtung der Bremsscheibe (3) gelagert ist, wobei der Bremsbelag (4) parallel zur Bremsscheibe (3) geführt ist und beim Bremsvorgang im wesentlichen parallel zur Bremsscheibe (3) angelegt wird.

5. Scheibenbremse nach einem der vorhergehenden Ansprüche, **dadurch gekennzeichnet, daß** sie mindestens einen weiteren elastisch verformbaren Ring (120) enthält, der zumindest in einer bestimmten Betriebsphase die Funktion einer Kolbennachstelleinrichtung übernimmt.

6. Scheibenbremse nach Anspruch 5, **dadurch gekennzeichnet, daß** der zusätzliche elastische verformbare Ring (120) in derselben Ringnut (106) des Bremssattelsattelgehäuses (101) und/oder derselben Ringnut (105) des Bremskolbens (102) einliegt wie der erste elastisch verformbare Ring (107), der Teil der Rückführeinrichtung ist.

7. Scheibenbremse nach Anspruch 6, **dadurch gekennzeichnet, daß** zwischen den elastisch verformbaren Ringen (107, 120) ein Distanzring (121) angeordnet ist.

8. Scheibenbremse nach Anspruch 7, **dadurch gekennzeichnet, daß** der Distanzring (121) eine Elastizität aufweist, die geringer als diejenige der elastisch verformbaren Ringe (107, 120) ist.

## Claims

1. Disc brake for vehicles having a brake disc, a caliper housing (1, 101), at least one brake piston displaceable in a bore (9, 109) of the caliper housing, and a piston return device, which comprises at least one elastically deformable ring (7, 107) engaging into an annular groove (5, 105) of the brake piston,
**characterized in that**
the elastically deformable ring (7; 107) also engages into an annular groove (6; 106) in the wall of the bore (9; 109) of the caliper housing (1; 101) and that one (5; 105) of the two annular grooves (5, 6; 105, 106) is wider in axial direction than the other (6; 106).

2. Disc brake according to claim 1, **characterized in that** one (5; 105) of the two grooves (5, 6; 105, 106) is deeper than the other (6; 106).

3. Disc brake according to claim 1 or 2, **characterized in that** one (5; 105) of the two annular grooves (5, 6; 105, 106) has a cross section, which reduces in the direction, in which the elastically deformable ring (7; 107) attempts to move upon extension of the brake piston (2; 102).

4. Disc brake according to one of the preceding claims, **characterized in that** the brake piston (2; 102) is mounted at an acute angle to the running direction of the brake disc (3), wherein the brake lining (4) extends parallel to the brake disc (3) and during the braking operation is applied substantially parallel to the brake disc (3).

5. Disc brake according to one of the preceding claims, **characterized in that** it contains at least one further elastically deformable ring (120), which at least in a specific operating phase performs the function of a piston resetting device.

6. Disc brake according to claim 5, **characterized in that** the additional elastically deformable ring (120) lies in the same annular groove (106) of the caliper housing (101) and/or the same annular groove (105) of the brake piston (102) as the first elastically deformable ring (107), which is part of the return device.

7. Disc brake according to claim 6, **characterized in that** a spacer ring (121) is disposed between the elastically deformable rings (107, 120).

8. Disc brake according to claim 7, **characterized in that** the spacer ring (121) has an elasticity, which is lower than that of the elastically deformable rings (107, 120).

## Revendications

1. Frein à disque pour véhicules, avec un disque de frein,
un boîtier d'étrier de frein (1, 101), au moins un piston de frein, déplaçable dans un perçage (9, 109) du boîtier d'étrier de frein, et un dispositif de rappel de piston, comprenant au moins un anneau (7, 107) déformable élastiquement, s'engageant dans une gorge annulaire (5, 105) du piston de frein,
**caractérisé en ce que**
l'anneau (7 ; 107) déformable élastiquement s'engage également dans une gorge annulaire (6 ; 106), ménagée dans la paroi du perçage (9 ; 109) du boîtier d'étrier de frein (1 ; 101), et **en ce que** l'une (5 ; 105) des deux gorges annulaires (5, 6 ; 105, 106), est plus large que l'autre (6 ; 106) en direction axiale.

2. Frein à disque selon la revendication 1, **caractérisé en ce que** l'une (5 ; 105) des deux gorges (5, 6 ; 105, 106) est plus profonde que l'autre (6 ; 106).

3. Frein à disque selon la revendication 1 ou 2, **caractérisé en ce que** l'une (5 ; 105) des deux gorges annulaires (5, 6 ; 105, 106) présente une section transversale allant en diminuant, dans la direction dans laquelle l'anneau (7 ; 107) déformable élastiquement tente de se déplacer lors du déploiement du piston de frein (2 ; 102).

4. Frein à disque selon l'une des revendications précédentes, **caractérisé en ce que** le piston de frein (2 ; 102) est monté sous un angle aigu par rapport à la direction de défilement du disque de frein (3), la garniture de frein (4) étant guidée parallèlement au disque de frein (3) et étant appliquée essentiellement parallèlement au disque de frein (3), lors du processus de freinage.

5. Frein à disque selon l'une des revendications précédentes, **caractérisé en ce qu'**il contient au moins un autre anneau (120) déformable élastiquement qui, au moins en une phase de fonctionnement déterminée, assure le rôle de dispositif de réglage du piston.

6. Frein à disque selon la revendication 5, **caractérisé en ce que** l'anneau (120) déformable élastiquement, supplémentaire, s'insère dans la même gorge annulaire (106) du boîtier d'étrier de frein (101) et/ou la même gorge annulaire (105) du piston de frein (102) que celle où s'insère le premier anneau (107) déformable élastiquement, faisant partie du dispositif de rappel.

7. Frein à disque selon la revendication 6, **caractérisé en ce qu'**une bague d'espacement (121) est disposée entre les anneaux (107, 120) déformables élastiquement.

8. Frein à disque selon la revendication 7, **caractérisé en ce que** la bague d'espacement (121) présente une élasticité inférieure à celle des anneaux (107, 120) déformables élastiquement.
